Europäisches Patentamt

European Patent Office

Office européen des brevets

(19)

(11) Numéro de publication: **0 338 948**
**A1**

(12)
# DEMANDE DE BREVET EUROPEEN

(21) Numéro de dépôt: **89420139.1**

(22) Date de dépôt: **19.04.89**

(51) Int. Cl.⁴: **H 02 G 5/06**

(30) Priorité: **19.04.88 FR 8805423**

(43) Date de publication de la demande:
**25.10.89 Bulletin 89/43**

(84) Etats contractants désignés:
**AT BE CH DE ES FR GB GR IT LI LU NL SE**

(71) Demandeur: **ERICO FRANCE S.A.R.L.**
**Rue Benoît Fourneyron Zone Industrielle Sud**
**F-42160 Andrézieux Bouthéon(Loire) (FR)**

(72) Inventeur: **Fuchs, Jean Claude**
**49 La Bertrandière**
**F-42580 L'Etrat (FR)**

**Chauquet, Jacques**
**F-74130 Ayse (FR)**

**Reiser, Wolfgang**
**Haupstrasse 6**
**DD-6754 Otterburg (DE)**

(74) Mandataire: **Perrier, Jean-Pierre et al**
**Cabinet GERMAIN & MAUREAU 12 rue de la République**
**F-42000 St-Etienne (FR)**

(54) **Dispositif de fixation de barres conductrices dans un module d'alimentation électrique.**

(57) Ce dispositif est du type comprenant un jeu de barres conductrices 2 destinées à assurer la conduction du courant électrique, des isolateurs 3 emboîtés de part et d'autre des barres 2 et des supports transversaux 14, disposés de part et d'autre du jeu de barres, portant les isolateurs 3 et assurant le maintien de l'écartement entre les barres.

Selon l'invention, chacun des supports transversaux 14 présente, au niveau de chacune de ses zones de coopération 21 avec au moins un isolateur 3, une pièce métallique longitudinale de renfort 22, de section transversale en U, dont les ailes 22a, d'une part, coopèrent avec les parois latérales d'au moins un isolateur 3, et, d'autre part, s'adossent par leurs extrémités contre les bords de découpe en U 14b ménagés dans les ailes du support 14 tandis que son âme est calée en translation par rapport à ce suppport 14.

FIG.2

Bundesdruckerei Berlin

**Description**

## Dispositif de fixation de barres conductrices dans un module d'alimentation électrique.

La présente invention est relative aux modules d'alimentation utilisées pour assurer dans des gammes de puissances électriques variables mais élevées, et au moyen de barres conductrices, les connexions entre transformateurs et armoires électriques de distribution, les connexions au sein de ces dites armoires et voire les connexions entre les armoires de distribution et des récepteurs utilisant l'énergie électrique.

L'utilisation de courants de forte puissance pour une tension donnée implique généralement des intensités élevées générant, lors d'un court-circuit, des forces électromagnétiques transversales tendant à déformer les barres conductrices.

Il va de soi que de tels courants nécessitent, outre l'utilisation de matériaux particuliers pour leur conduction, notamment en vue de diminuer les fuites et les pertes, une protection adaptée pour éviter, voire éliminer tout risque de court-circuit pouvant s'établir entre les différents éléments conducteurs. Aussi existe-t-il actuellement divers dispositifs permettant de limiter ces risques de court-circuits et d'autoriser le travail du personnel au voisinage immédiat de ces conducteurs.

L'un de ces dispositifs, décrit dans le brevet U.S. 3072736, comprend, dans un boitier de protection, des supports transversaux isolants disposés de part et d'autre des barres conductrices de l'électricité et comportant des échancrures dans lesquelles sont logées lesdites barres conductrices.

Un autre dispositif, décrit dans le brevet australien 420647, comprend des supports transversaux disposés de part et d'autre des barres conductrices et portant des isolateurs de section en U constituant berceaux de maintien des barres conductrices. Ces berceaux sont réalisés en matériau isolant et ont une résistance mécanique moins élevée que les métaux. De ce fait, ils risquent d'être détériorés ou brisés sous l'action des forces électromagnétiques transversales s'exerçant sur les barres conductrices à l'occasion d'un court-circuit. Pour remédier à cela, les ailes longitudinales des isolateurs sont renforcées par des pièces coudées formées de cornières en L ou de pièces ein U disposées transversalement de part et d'autre de ces isolateurs et vissées sur les supports. Ce mode de renfort conduit à un temps de montage long. Ce temps est d'ailleurs augmenté par la mise en place des moyens assurant le calage en translation longitudinal des isolateurs, afin d'empêcher leur déplacement sous l'effet des vibrations et/ou dilatation sollicitant les barres. A cet effet, ces isolateurs sont liés à leur support par coopération de rainures, en T ou en C ménagées à leur base, avec les profils complémentaires du support, rainures exigeant de les introduire transversalement et un à un sur le support correspondant.

La présente invention a pour but de fournir un dispositif de fixation des barres conductrices dans un module d'alimentation qui procure un bon maintien des barres conductrices, même lors d'un court-circuit, et qui ne nécessite aucun organe de liaison, tels que vis ou boulons et soit de montage rapide.

A cet effet, dans le dispositif selon l'invention, chacun des supports transversaux présente, au niveau de chacune de ses zones de coopération avec au moins un isolateur, une pièce métallique longitudinale de renfort, de section transversale en U, dont les branches, d'une part, coopèrent avec les parois latérales d'au moins un isolateur et, d'autre part, s'adossent par leurs extrémités contre les bords de découpe en U ménagés dans les ailes du support, tandis que l'âme est calée en translation par rapport à ce support.

Le montage de chaque isolateur s'effectue rapidement par mise en place de la pièce en U sur l'isolateur et introduction de l'ensemble ainsi obtenu dans l'une des découpes du support. Après mise en place de la barre conductrice et montage d'un autre isolateur sur le support opposé, la barre est parfaitement maintenue et plaque elle-même les isolateurs dans les découpes du support en assurant ainsi l'autoverrouillage des divers composants.

Lors d'un court-circuit, les ailes des pièces de renfort reprennent les efforts s'exerçant sur les ailes des isolateurs et s'appuient sur les bords des découpes des supports en s'opposant à toute détérioration ou destruction par cisaillement de l'isolateur sous l'action des forces électromagnétiques.

Dans une forme d'exécution de l'invention, les moyens de calage en translation de l'âme de la pièce de renfort sont constitués par les faces latérales d'une rainure transversale ménagée dans la partie centrale dorsale de chaque isolateur, débouchant à l'opposé de la rainure longitudinale ménagée dans l'isolateur pour la barre conductrice, face constituant également moyens de calage en translation longitudinale de l'isolateur par rapport au support.

Ainsi, la mise en place de l'isolateur dans la découpe du support assure non seulement le calage en translation de la pièce de renfort mais aussi celui de l'isolateur par rapport au support, et cela sans recours à aucun autre moyen de fixation. Un tel montage, bien que très simple, est rapide et fiable, puisqu'il est verrouillé par la mise en place de la barre conductrice.

D'autres caractéristiques et avantages ressortiront de la description qui suit en référence au dessin schématique annexé représentant, à titre d'exemples non limitatifs, une forme d'exécution du dispositif de fixation selon l'invention.

Figure 1 est une vue en perspective avec coupe partielle montrant un module d'alimentation selon l'invention,

Figure 2 est une vue en perspective avec coupe partielle montrant à échelle agrandie le dispositif de fixation d'une barre selon l'invention,

Figures 3 et 4 sont des vues en perspective, respectivement de la pièce de renfort et d'un isolateur,

Figure 5 est une vue de côté en coupe transversale d'une autre forme d'exécution de l'isolateur lorsqu'il est monté sur son support,

Figure 6 est une vue en plan par dessus de l'isolateur de figure 5,

Figure 7 est une vue partielle en coupe transversale d'un module selon l'invention,

Figure 8 est une vue en perspective, avec coupe partielle, montrant une variante du dispositif dans laquelle une même découpe du support positionne deux isolateurs juxtaposés.

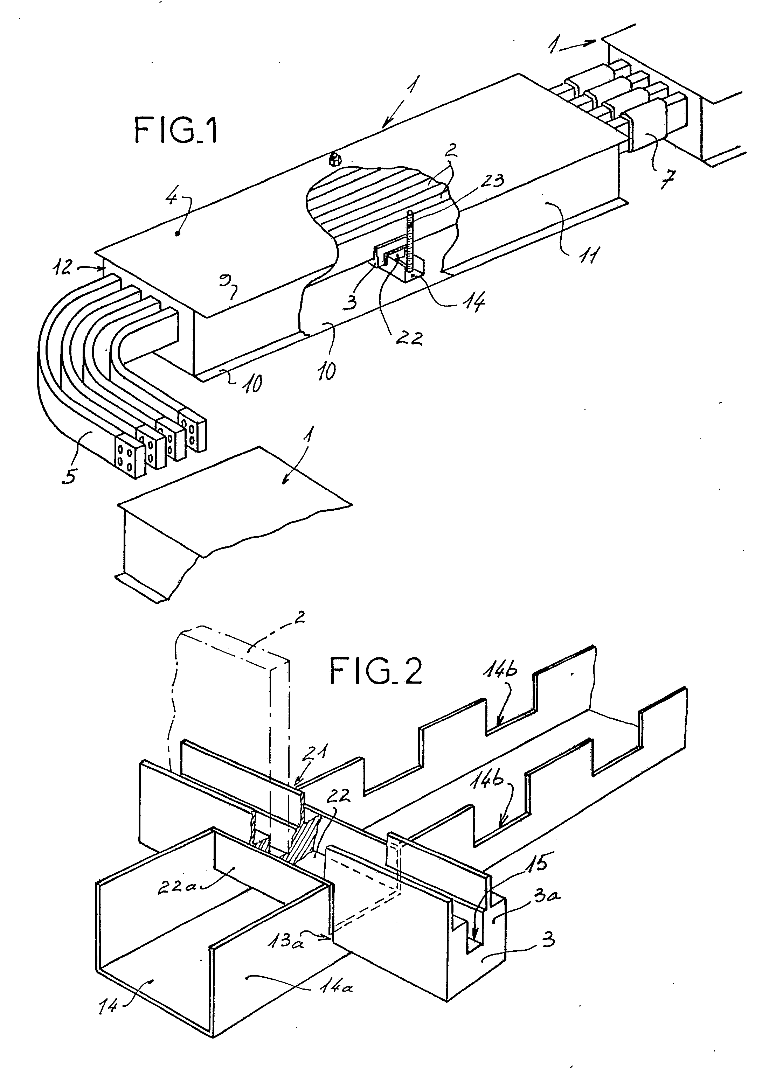

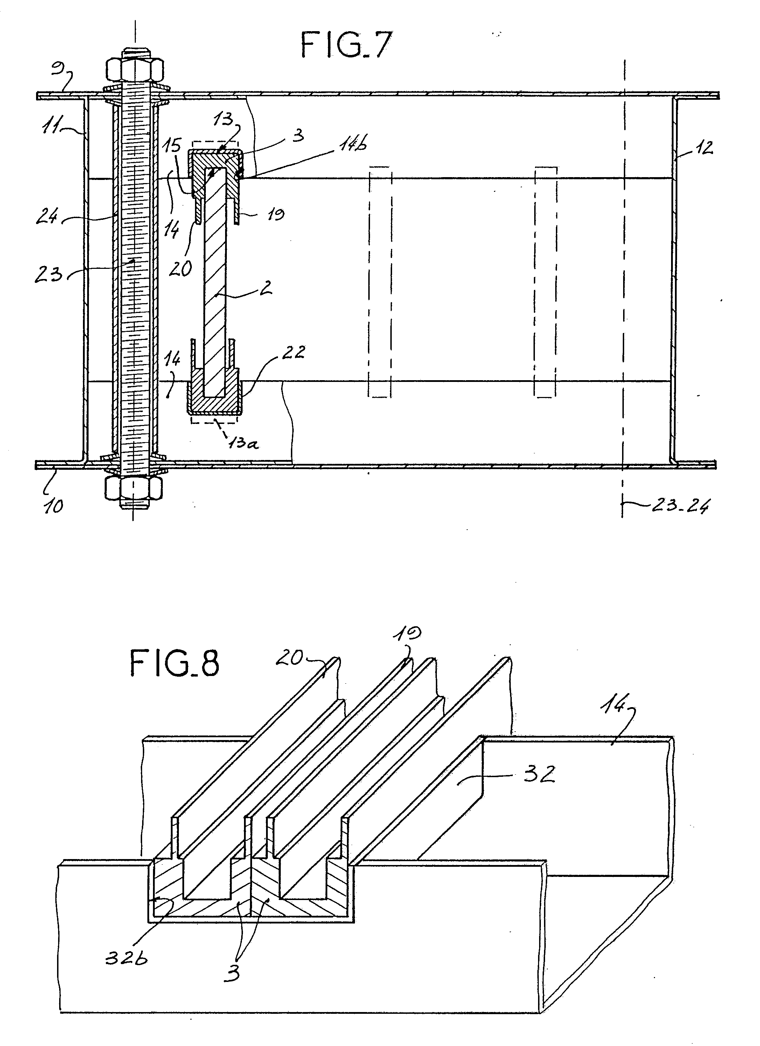

Comme le montre la figure 1, le module d'alimentation 1 se compose d'un jeu de barres conductrices 2 de section rectangulaire. Ces barres sont parallèles et rectilignes. Dans cet exemple, qui correspond à une alimentation triphasée, on peut observer quatre barres de conduction, respectivement trois barres correspondent aux trois phases différentes et une barre correspond à la phase neutre. Ce module est disposé dans un boitier de protection 4 comprenant, comme montré figure 7, une plaque supérieure 9 et une plaque inférieure 10 reliée par des éléments latéraux de profil en C, respectivement 11 et 12, l'assemblage de ces différents éléments est réalisé de manière connue par poinçonnage. Le boitier 4 est muni de tiges transversales boulonnées 23 pour la fixation, par des entretoises 24, des supports 14 des isolateurs 3.

Les barres 2 sont reliées bout à bout aux barres 2 d'un autre module ou à des barres flexibles 5 par soudure aluminothermique,représenté schématiquement en 7 à la figure 1.

Dans chaque module 1, les différentes barres 2 sont positionnées et maintenues par les isolateurs 3 les enfourchant de part et d'autre. Ces isolateurs sont portés par les supports transversaux 14 disposés de part et d'autre des barres.

Comme le montre la figure 4, chaque isolateur 3, réalisé en matière synthétique moulée, tel qu'en polyester chargé en fibres de verre, comporte une lumière longitudinale 15 s'étendant sur toute sa longueur et définissant des ailes 3a.

Selon l'invention, il comporte aussi, débouchant de sa partie centrale dorsale, une rainure transversale 13. Les faces latérales 13a de cette rainure constituent moyens de calage en translation de l'isolateur en coopérant, comme le montre la figure 2, avec les faces externes des ailes 14a du profil en U du support 14.

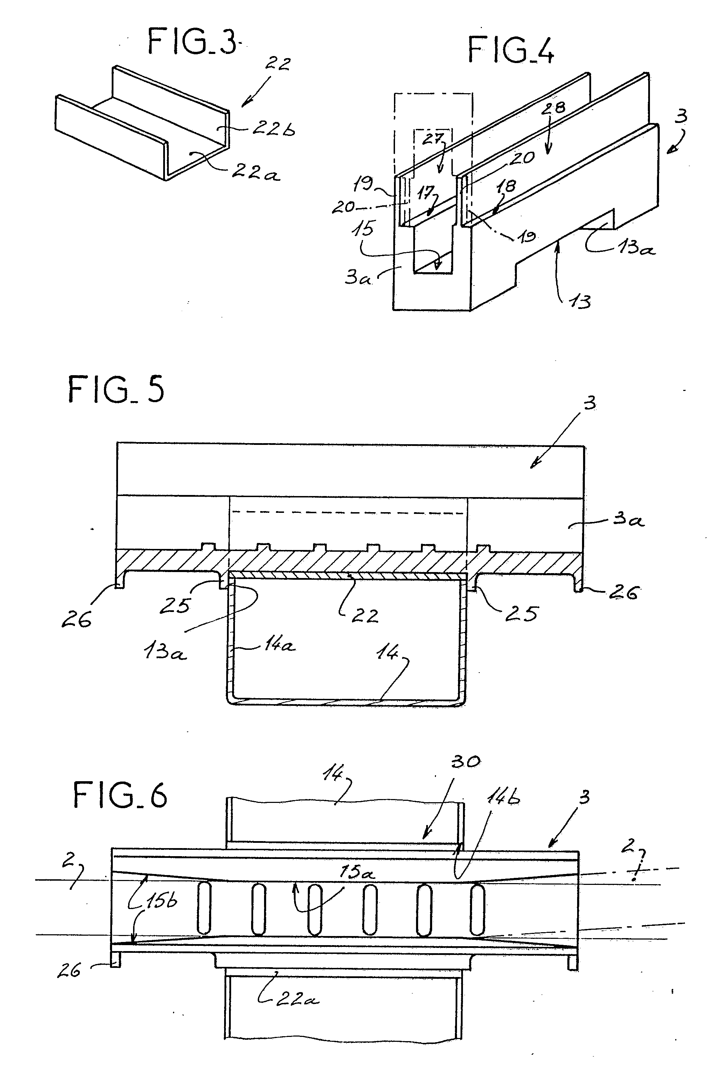

Chaque support 14 est muni, dans chacune de ses zones 21 de coopération avec un isolateur, de découpes 14b ménagées dans ses ailes 14a et destinées à recevoir la partie centrale de l'isolateur et une pièce de renfort 22. Celle-ci, représentée plus en détails à la figure 3, est réalisée en acier et présente une section en U, c'est à dire comporte une âme 22a et deux ailes latérales 22b. Ses dimensions transversales correspondent à celles des découpes 14b, au faible jeu fonctionnel près, et sa longueur est égale à la largeur du support 14.

Lors du montage de l'isolateur 3 sur le support 14, la pièce de renfort 22 est d'abord mise en place sur la partie dorsale de cet isolateur, et plus précisément dans la rainure 13 de façon que ces ailes 22b enveloppent les faces latérales externes de cet isolateur. L'ensemble, ainsi obtenu, est mis en place dans l'espace délimité par les deux découpes alignées 14b du support 14. En fin d'engagement, et comme montré à la figure 2, la pièce 22, adossée par ses extrémités sur les bords des découpes 14b, renforce la partie centrale de l'isolateur 3 et est calée en translation par les faces latérales 13a de la rainure 13 de cet isolateur. Ces faces calent aussi l'isolateur en translation par rapport aux faces latérales du support 14. Cette liaison est verrouillée par mise en place de la barre 2 et de l'isolateur 3 en vis à vis comme montré à la figure 7.

Cette pièce métallique 22 permet à l'isolateur 3 de résister aux efforts intenses pouvant intervenir lors de court-circuits. Elle augmente donc la résistance de l'isolateur et la fiabilité de l'installation.

La figure 8 montre que, dans le cas où chacune des phases du circuit électrique, comporte plus d'une barre conductrice 2, et en l'occurence deux, une même pièce métallique 32 est utilisée pour renforcer deux isolateurs 3 juxtaposés dans une découpe 34b de dimensions appropriées.

Dans une forme d'exécution de l'isolateur 3, montrée à la figure 3, les faces 13a de la rainure 13 correspondent aux faces en vis à vis de bourrelets 25 saillants du dos de cet isolateur. Ces bourrelets sont distincts de nervures 26 ceinturant les extrémités de l'isolateur pour améliorer sa rigidité et satisfaire aux contraintes d'isolation, en réduisant notamment les courants de fuite.

Suivant une caractéristique complémentaire de l'invention, chacune des deux ailes 3a de chaque isolateur 3 dans la lumière 15, est composée de deux parties. Une première partie, disposée à proximité de la base de l'isolateur et délimitée par les ailes 3a, assure la fonction de maintien de la barre et comporte donc une lumière 15 de largeur constante, égale au jeu fonctionnel près, à l'épaisseur de la barre. Il faut d'ailleurs préciser ici que si les barres conductrices ont des sections qui varient en rapport avec l'intensité devant les parcourir, il est d'usage de faire varier cette section en jouant uniquement sur la largeur de la barre, c'est à dire en conservant une épaisseur constante.

La deuxième partie de la lumière 15, s'étendant des extrémités libres des ailes jusqu'à la première partie de ses ailes, est agencée pour contribuer à l'élimination des pertes électriques par courants de fuite, tout en permettant avec un même type d'isolateur, de maintenir toutes les barres, y compris celles ayant la plus plus petite largeur. A cet effet, cette dernière partie, définie par une lumière plus large, est composée, comme montré figure 4, de voiles 19-20 qui, plus minces que les ailes 3a qu'ils prolongent, sont décalés transversalement par rapport au plan médian de chacune de ces ailes pour former des logements respectivement intérieur 27 et extérieur 28. La profondeur de ces logements est limitée par des épaulements respectivement 17 et 18. Lorsque deux de ces isolateurs sont utilisées pour fixer une barre de plus petite section, et sont donc disposés en vis à vis l'un de l'autre, comme montré en traits mixtes à la figure 4, les voiles des ailes de chaque isolateur s'intercalent entre les voiles de l'autre isolateur en pénétrant dans le logement correspondant, sans que cela réduise la largeur de la lumière 15.

Enfin, et comme montré figure 6, pour permettre en cas de court-circuit et sans détérioration de l'isolateur, une déformation des barres 2 hors de leur zone d'encastrement 30 dans cet isolateur, c est à dire au-delà de la zone rigidifiée par la pièce 22 et par le support 14, les faces latérales 15a de la lumière 15 qui sont parallèles dans cette zone 30 sont prolongées au-delà de cette zone et jusqu'aux extrémités de l'isolateur par des faces 15b allant en s'évasant vers l'extérieur.

Grâce à cet agencement, et comme montré en traits mixtes à la figure 6, chaque barre 2 peut, sous l'action, des forces électromagnétiques, se déformer hors de ses zones d'encastrement sans risquer de détruire l'isolateur, donc sans risque d'engendrer un court-circuit nécessitant la réparation du dispositif de fixation dans le module.

Il ressort de ce qui précède que le dispositif de fixation, selon l'invention, fait appel à des éléments simples, peu onéreux, de montage rapide et aisé, s'autoverrouillant; sans aucun moyen de liaison complémentaire et permet d'obtenir un bon maintien des barres avec une parfaite isolation, et cela tant en fonctionnement normal qu'en cas de court-circuit. Par ailleurs, grâce à la structure de ses composants, ce dispositif peut être utilisé quelle que soit la section transversale des barres, ce qui limite les stocks de pièces détachées, simplifie le montage et facilite les adaptations ultérieures en cours d'exploitation.

**Revendications**

1. Dispositif de fixation de barres conductrices dans un module d'alimentation électrique 1 comprenant, un jeu de barres conductrices 2, rectilignes et parallèles, destinées à assurer la conduction du courant électrique, des isolateurs 3, emboités localement de part et d'autre desdites barres conductrices 2, et des supports transversaux 14, disposés de part et d'autre du jeu de barres 2, portant les isolateurs 3 et assurant le maintien et l'écartement entre les différentes barres 2, caractérisé en ce que chacun des supports transversaux 14 présente, au niveau de chacune de ses zones de coopération 21 avec au moins un isolateur 3, une pièce métallique longitudinale de renfort 22-32, de section transversale en U, dont les ailes 22a, d'une part, coopèrent avec les parois latérales d'au moins un isolateur 3, et, d'autre part, s'adossent par leurs extrémités contre les bords de découpe en U 14b-34b ménagés dans les ailes du support 14 tandis que son âme 22b est calée en translation par rapport à ce support 14.

2. Dispositif selon la revendication 1, caractérisé en ce que les moyens de calage en translation de l'âme 22b de la pièce de renfort 22, sont constitués par les faces latérales 13a d'une rainure transversale 13 ménagée dans la partie centrale dorsale de chaque isolateur 3 et débouchant à l'opposé de la rainure longitudinale 15 ménagée dans l'isolateur pour la barre conductrice 2, faces constituant également moyens de calage en translation longitudinale de l'isolateur 3 par rapport au support 14.

3. Dispositif selon l'une quelconque des revendications 1 et 2, caractérisé en ce que la pièce de renfort 32 coopère avec les faces externes de plusieurs isolateurs 3 juxtaposés dans une même découpe 34b du support 14.

4. Dispositif selon la revendication 1 et l'un quelconque des revendications 2 à 3, caractérisé en ce que chacune des deux ailes 3a délimitées dans chaque isolateur 3 par la lumière longitudinale 15 est prolongée, en direction de son extrémité libre et au-delà de sa partie apte à assurer le maintien de la barre conductrice 2, par un voile de plus faible épaisseur 19-20, décalé transversalement par rapport au plan médian longitudinal de l'aile et bordé par un épaulement 17-18 délimitant un logement 27-28 pour le voile 20-19 de l'aile opposée de l'isolateur 3 en vis à vis.

5. Dispositif selon la revendication 4, caractérisé en ce que la lumière longitudinale 15 de chaque isolateur comporte à chacune de ses extrémités, et dans ses zones dépassant du support, des faces latérales 15b allant en s'évasant vers l'extérieur.

FIG.1

FIG.2

FIG.3

FIG.4

FIG.5

FIG.6

# FIG.7

# FIG.8

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4 ) |
|---|---|---|---|
| A,D | US-A-3072736 (J.B.WALLACE)<br>* colonne 3, ligne 16 - ligne 54 *<br>* colonne 5, ligne 9 - ligne 20; figures 1, 10 *<br>--- | 1 | H02G5/06 |
| A | FR-A-2303453 (WESTINGHOUSE ELECTRIC CORPORATION)<br>* page 1, ligne 1 - ligne 16 *<br>* page 3, ligne 1 - page 4, ligne 6; figures 1, 5 *<br>--- | 1 | |
| A | FR-A-2458162 (J.C.MORITEL)<br>* page 5, ligne 26 - ligne 40; figure 6 *<br>--- | 1 | |
| A | AT-B-330876 (SPINDELBALKER)<br>* page 3, ligne 1 - ligne 22; figure 1 *<br>--- | 1 | |
| A,D | AU-B-420647 (BATEBILT PTY. LIMITED)<br>* page 7, dernier alinéa - page 8, dernier alinéa; figure 3 *<br>------ | 1 | |

| | DOMAINES TECHNIQUES RECHERCHES (Int. Cl.4 ) |
|---|---|
| | H02G<br>H01R |

Le présent rapport a été établi pour toutes les revendications

| Lieu de la recherche | Date d'achèvement de la recherche | Examinateur |
|---|---|---|
| LA HAYE | 28 JUIN 1989 | WOODALL C.G. |